# EUROPÄISCHE PATENTSCHRIFT

(11) **EP 3 998 518 B1**
(45) Veröffentlichungstag und Bekanntmachung des Hinweises auf die Patenterteilung: **07.06.2023**
(21) Anmeldenummer: 21213709.5
(22) Anmeldetag: 28.01.2016
(51) Int. Cl.: G05D 1/02, G01C 21/36, G08G 1/0968, G08G 1/14

(54) **FÜHREN EINES KRAFTFAHRZEUGS AUF EINEM PARKPLATZ**
GUIDANCE OF A MOTOR VEHICLE IN A CAR PARK
CONDUITE D'UN VÉHICULE AUTOMOBILE DANS UNE AIR DE STATIONNEMENT

(30) Priorität: 11.03.2015 DE 102015204359
(43) Veröffentlichungstag der Anmeldung: 18.05.2022
(62) Teilanmeldung aus: 16702514.7
(73) Patentinhaber: Robert Bosch GmbH, 70442 Stuttgart (DE)
(72) Erfinder: Nordbruch, Stefan, 71229 Leonberg (DE); Hoffmann, Stefan, 74321 Bietigheim (DE)

(56) Entgegenhaltungen:
- WO-A1-2014/090463
- DE-A1-102009 046 912
- DE-A1-102012 222 562
- US-A1- 2001 001 847

## Beschreibung

Die Erfindung betrifft eine Technik zum automatisierten Führen eines Kraftfahrzeugs auf einen Parkplatz. Insbesondere betrifft die Erfindung die Bestimmung von Bewegungsdaten für das Kraftfahrzeug.

### Stand der Technik

DE 102012222562 A1 offenbart ein System und Verfahren für bewirtschaftete Parkflächen zur Überführung eines Fahrzeugs von einer Startposition in eine Zielposition, umfassend eine ortsfest angeordnete zentrale Recheneinheit zur Berechnung einer Bewegungsbahn, entlang der sich das Fahrzeug mit einer Fahrzeuggeschwindigkeit autonom von der Startposition in die Zielposition bewegt, und eine Übertragungseinrichtung zur Übertragung der Bewegungsbahn an das Fahrzeug.

US 2001/0001847 A1 offenbart ein Fahrzeugleit- und Zielführungssystem mit einem fahrzeugfesten Navigationssystem und einem übergeordneten Dienstesystem zur Bereitstellung von Navigationsinformationen, wobei das Navigationssystem mit dem Dienstesystem über Sende- und Empfangseinrichtungen zumindest zeitweise kommuniziert.

DE 102009046912 A1 offenbart ein Verfahren für die Führung eines Fahrzeugs von einer Start- zu einer Zielposition.

WO 2014090463 A1 zeigt ein in Verfahren zur Unterstützung eines Fahrers bei einem Fahrmanöver, bei dem zur Befolgung einer Trajektorie entweder dem Fahrer von einem Fahrassistenzsystem Anweisungen zur Durchführung von notwendigen Lenkeinstellungen und zur Längsführung gegeben werden oder die Lenkeinstellungen und gegebenenfalls die Längsführung von dem Fahrassistenzsystem automatisch durchgeführt werden.

Bei einem vollautomatisierten (autonomen) sogenannten Valet Parking wird ein Kraftfahrzeug von seinem Fahrer auf einer Abgabestelle, zum Beispiel vor einem Parkhaus geparkt und von da fährt das Kraftfahrzeug automatisiert in eine Parkposition / Parkbucht oder von dort zurück zur Abgabestelle.

Mit heutigen bzw. kurzfristig in den Markt eingeführten Kraftfahrzeugen ist ein solches Automated Valet Parking (AVP) in der Regel allerdings gar nicht oder nur mit hohem Aufwand durchführbar, da das Kraftfahrzeug hierfür eine Vielzahl von Zusatzsystemen (Steuergeräte, Sensoren, Steuerverfahren) und Daten benötigt, die in diesen Kraftfahrzeugen üblicherweise nicht zur Verfügung stehen.

Ein Verfahren zum Führen eines Kraftfahrzeugs auf einem Parkplatz umfasst Schritte des kraftfahrzeugexternen Ermittelns einer Route auf dem Parkplatz von einer Startposition zu einer Zielposition, wobei zumindest ein Teilstück der Route an das Kraftfahrzeug über ein Kommunikationsnetzwerk gesendet wird, wobei das Kraftfahrzeug beim Abfahren des Teilstücks auf eine Abweichung beim autonomen Abfahren des Teilstücks mittels eines kraftfahrzeugexternen Überwachungssystems überwacht wird.

Eine Vorrichtung zum Führen eines Kraftfahrzeugs auf einem Parkplatz umfasst einen Prozessor, der ausgebildet ist, eine Route auf dem Parkplatz von einer Startposition zu einer Zielposition zu ermitteln, eine Kommunikationsschnittstelle, die ausgebildet ist, zumindest ein Teilstück der Route an das Kraftfahrzeug über ein Kommunikationsnetzwerk zu senden, und ein Überwachungssystem, das ausgebildet ist, das Kraftfahrzeug beim autonomen Abfahren des Teilstücks auf eine Abweichung beim Abfahren des Teilstücks zu überwachen.

Ein Parksystem für Kraftfahrzeuge umfasst einen Parkplatz, der einen oder mehrere Parkpositionen aufweist, wobei das Parksystem die oben genannte Vorrichtung zum Führen eines Kraftfahrzeugs auf einem Parkplatz umfasst.

Ein Parkplatz im Sinne der vorliegenden Erfindung kann auch als eine Parkfläche bezeichnet werden und dient als Abstellfläche für Kraftfahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Kraftfahrzeug selbstständig, also ohne einen Eingriff eines Fahrers, navigiert oder fährt. Das Kraftfahrzeug fährt also selbstständig auf dem Parkplatz, ohne dass ein Fahrer hierfür das Kraftfahrzeug steuern oder sich im Kraftfahrzeug befinden müsste. Ein solch autonom fahrendes Kraftfahrzeug, das automatisch ein- und ausparken kann, wird beispielsweise als ein AVP-Kraftfahrzeug bezeichnet. AVP steht für "automated valet parking" und kann mit "automatischer Parkvorgang" übersetzt werden. Kraftfahrzeuge, die diese AVP-Funktionalität nicht aufweisen, werden beispielsweise als normale Kraftfahrzeuge bezeichnet.

Eine Abgabeposition im Sinne der vorliegenden Erfindung ist eine Position, an welcher ein Fahrer des Kraftfahrzeugs sein Kraftfahrzeug für einen autonomen Parkvorgang abstellen kann und von dieser sein Kraftfahrzeug zu einem späteren Zeitpunkt wieder abholen kann.

Eine Parkposition im Sinne der vorliegenden Erfindung ist eine Position, an welcher das Kraftfahrzeug autonom parken soll.

Das Kraftfahrzeug kann autonom von der Abgabeposition zu der Parkposition navigieren oder fahren. Das Kraftfahrzeug kann autonom in die Parkposition einparken. Das Kraftfahrzeug kann autonom aus der Parkposition ausparken. Das Kraftfahrzeug kann autonom von der Parkposition zu der Abgabeposition navigieren oder fahren.

Bei einer Abweichung kann eine Ausgleichsroute zum Ausgleichen der Abweichung ermittelt werden, wobei die Ausgleichsroute über das Kommunikationsnetzwerk an das Kraftfahrzeug gesendet wird, so dass das Kraftfahrzeug mittels Abfahren der Ausgleichsroute die Abweichung ausgleichen kann.

Bei einer Abweichung kann ein Stoppsignal über das Kommunikationsnetzwerk an das Kraftfahrzeug gesendet werden, so dass das Kraftfahrzeug ansprechend auf einen Empfang des Stoppsignals stoppen kann.

Teilstücke der Route können sukzessive über das Kommunikationsnetzwerk an das Kraftfahrzeug gesendet werden, so dass das Kraftfahrzeug die Route stückweise abfahren kann. Das heißt also insbesondere, dass das Kraftfahrzeug die Route stückweise abfahren kann. Sukzessive kann hier insbesondere bedeuten, dass, erst nachdem das Kraftfahrzeug das Teilstück abgefahren hat, ihm ein weiteres Teilstück, welches dem soeben abgefahrenen Teilstück unmittelbar folgt, zur Verfügung gestellt wird. Zur Verfügung gestellt werden heißt hier insbesondere, dass die Teilstücke über das Kommunikationsnetzwerk an das Kraftfahrzeug gesendet werden.

Die jeweilige Länge der Teilstücke ist abhängig von einem Schwierigkeitsgrad betreffend das Abfahren des Teilstücks. Zum Beispiel kann ein gerades Teilstück länger als ein kurviges Teilstück sein. Die Länge eines Teilstücks ist dabei also abhängig vom dem aktuellen Fahrtroutenteilstück bzw. der Fahrtroutenkomplexität.

Eine Einparkroute zum Einparken und/oder eine Ausparkroute zum Ausparken können in respektive aus einer Parkposition kraftfahrzeugextern ermittelt und über das Kommunikationsnetzwerk an das Kraftfahrzeug gesendet werden, so dass das Kraftfahrzeug in die bzw. aus der Parkposition autonom einparken bzw. autonom ausparken kann.

Das Kraftfahrzeug kann selbstständig, also autonom oder vollautomatisiert, ein- oder ausparken. Das Ein- oder Ausparken führt das Kraftfahrzeug selbst durch, insbesondere ermittelt es sich selbst die hierfür notwenige Ein- oder Ausparkroute.

Es kann zusätzlich eine Rückfahrroute zurück von der Zielposition zu der Startposition kraftfahrzeugextern ermittelt werden, wobei zumindest ein Teilstück der Rückfahrroute über das Kommunikationsnetzwerk an das Kraftfahrzeug gesendet wird, wobei das Kraftfahrzeug beim autonomen Abfahren des Teilstücks der Rückfahrroute mittels des kraftfahrzeugexternen Überwachungssystems auf eine Abweichung beim Abfahren des Teilstücks überwacht wird. Die im Zusammenhang mit der Route von der Start- zur Zielposition gemachten Ausführungen gelten analog auch für die Rückfahrroute.

Die Startposition kann eine Abgabeposition sein, an welcher ein Fahrer sein Kraftfahrzeug für einen automatischen Parkvorgang abstellen kann, und die Zielposition kann eine Parkposition sein, an welcher das Kraftfahrzeug automatisch parken kann, oder umgekehrt.

Der Erfindung liegt die Aufgabe zugrunde, eine Route oder Trajektorie zwischen der Startposition und der Zielposition verbessert zu ermitteln. Diese Aufgabe wird gelöst durch die Gegenstände der unabhängigen Ansprüche. Unteransprüche geben bevorzugte Ausführungsformen wieder.

Ein Verfahren zum Führen eines Kraftfahrzeugs auf einem Parkplatz umfasst Schritte des kraftfahrzeugexternen Ermittelns einer Trajektorie auf dem Parkplatz von einer Startposition zu einer Zielposition, des Sendens zumindest eines Teilstücks der Trajektorie an das Kraftfahrzeug über ein Kommunikationsnetzwerk und des Überwachens des Kraftfahrzeugs mittels eines kraftfahrzeugexternen Überwachungssystems beim autonomen Abfahren des Teilstücks auf eine Abweichung, wobei die Trajektorie in Abhängigkeit einer Beschaffenheit des Kraftfahrzeugs ermittelt wird.

Durch das Ermitteln der Trajektorie in Abhängigkeit der Beschaffenheit des Kraftfahrzeugs kann sichergestellt werden, dass das Kraftfahrzeug dazu in der Lage ist, die Trajektorie zu befahren. Eine Gefahr, dass das Kraftfahrzeug auf der Trajektorie stecken bleibt oder die Zielposition nicht erreichen kann, kann dadurch verringert werden.

Die Beschaffenheit kann einen Fahrzeugtyp umfassen. Der Fahrzeugtyp kann beispielsweise von einem Hersteller des Kraftfahrzeugs vergeben sein. Aus dem Fahrzeugtyp können beispielsweise ungefähre Fahrzeugabmessungen hervorgehen.

Die Beschaffenheit kann auch eine Ausstattung umfassen. Insbesondere in Kombination mit dem Fahrzeugtyp können so Außenmaße des Kraftfahrzeugs verbessert bestimmt werden. Außerdem kann eine Sonderausstattung, die die Fahrzeugumrisse beeinflusst, beispielsweise verbreiterte Außenspiegel oder eine Anhängerkupplung, berücksichtigt werden.

Es ist weiterhin bevorzugt, dass die Trajektorie einer Strecke zwischen der Startposition und der Zielposition zugeordnet ist. Dadurch können unterschiedliche Zielpositionen auf jeweils vorbestimmten Trajektorien durch das Kraftfahrzeug angesteuert werden.

In Abhängigkeit der unterstützten Freiheitsgrade kann eine n-dimensionale Matrix von Trajektorien vorgehalten werden, so dass beispielsweise einer Kombination aus Fahrzeugtyp, Startposition und Zielposition eine Trajektorie zugeordnet werden kann. Die für das Kraftfahrzeug ermittelte Trajektorie kann dadurch an die Spezifika der Strecke zwischen der Startposition und der Zielposition und des Kraftfahrzeugs verbessert angepasst sein.

Die einzelnen Trajektorien können auf unterschiedliche Weisen bestimmt werden. Insbesondere kann eine Trajektorie durch einen Versuch ermittelt werden. Für den Versuch kann beispielsweise ein Kraftfahrzeug des gleichen oder eines vergleichbaren Typs verwendet werden.

In einer anderen Ausführungsform wird die Trajektorie auf der Basis von geometrischen oder funktionalen Daten des Parkplatzes und des Kraftfahrzeugs bestimmt. Die geometrischen Daten des Kraftfahrzeugs können beispielsweise seine Umrisse, einen Radstand, einen minimalen Wendekreis, einen maximalen Lenkwinkel oder andere Charakteristika betreffen. Die funktionalen Daten können beispielsweise die Stellung eines Reglers umfassen.

Diese Vorgehensweisen können auch miteinander kombiniert werden. Insbesondere können einige Trajektorien durch Versuch und andere auf der Basis von geometrischen Daten bestimmt werden.

Es ist bevorzugt, dass eine Vielzahl von Trajektorien bestimmt und abgespeichert werden, bevor eine passende Trajektorie für das Kraftfahrzeug ermittelt wird. Das Bestimmen der einzelnen Trajektorien kann so vom Führen des Kraftfahrzeugs auf dem Parkplatz entkoppelt werden.

In einer Variante endet die Trajektorie vor einer Parkposition, wobei ein Einparkvorgang des Kraftfahrzeugs auf die Parkposition autonom durch das Kraftfahrzeug gesteuert wird. Dabei kann von einem Einparkassistenten an Bord des Kraftfahrzeugs vorteilhaft Gebrauch gemacht werden.

In einer anderen Variante umfasst die Trajektorie die Parkposition, so dass die Zielposition mit der Parkposition zusammenfallen kann. So kann auch ein Kraftfahrzeug ohne Parkassistent sicher auf die Parkposition geführt werden.

Es ist weiterhin bevorzugt, dass bestimmt wird, für welche Zielpositionen auf dem Parkplatz eine Trajektorie für das Kraftfahrzeug ermittelt werden kann. Unterschiedliche Zielpositionen können unterschiedlich anspruchsvolle Trajektorien erfordern. Kann ein Kraftfahrzeug aufgrund seiner geometrischen Beschaffenheit beispielsweise eine Engstelle auf einer Trajektorie nicht passieren oder einem Abbiegeradius der Trajektorie nicht folgen, so kann für diesen Fahrzeugtyp keine Trajektorie vorgesehen sein. Die im Bereich der Zielposition der Trajektorie liegende Parkposition kann dann durch das Kraftfahrzeug nicht erreicht werden. Ähnlich kann es sich verhalten, wenn die Abmessungen der Parkposition zu klein für das Kraftfahrzeug sind. Kann für eine Zielposition keine Trajektorie für das Kraftfahrzeug ermittelt werden, so kann eine andere Zielposition bestimmt werden, die durch das Kraftfahrzeug erreicht werden kann.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Eine Vorrichtung zum Führen eines Kraftfahrzeugs auf einem Parkplatz umfasst einen Prozessor, der ausgebildet ist, eine Trajektorie auf dem Parkplatz von einer Startposition zu einer Zielposition zu ermitteln, eine Kommunikationsschnittstelle, die ausgebildet ist, zumindest ein Teilstück der Trajektorie an das Kraftfahrzeug über ein Kommunikationsnetzwerk zu senden, ein Überwachungssystem, das ausgebildet ist, das Kraftfahrzeug beim autonomen Abfahren des Teilstücks auf eine Abweichung beim Abfahren des Teilstücks zu überwachen, und eine Ermittlungseinrichtung, die ausgebildet ist, die Trajektorie in Abhängigkeit einer Beschaffenheit des Kraftfahrzeugs zu ermitteln.

Ferner ist ein Parksystem für Kraftfahrzeuge vorgesehen, das einen Parkplatz mit einer oder mehreren Parkpositionen und die oben beschriebene Vorrichtung aufweist.

Die Erfindung wird im Folgenden anhand von bevorzugten Ausführungsbeispielen näher erläutert. Hierbei zeigen
- Fig. 1: ein Ablaufdiagramm eines Verfahrens zum Führen eines Kraftfahrzeugs auf einem Parkplatz,
- Fig. 2: eine Vorrichtung zum Führen eines Kraftfahrzeugs auf einem Parkplatz,
- Fig. 3: ein Parksystem für Kraftfahrzeuge,
- Fig. 4: ein Parksystem zu unterschiedlichen Zeitpunkten einer Durchführung eines automatischen Parkvorgangs,
- Fig. 5: eine Ansicht eines exemplarischen Parkplatzes, und
- Fig. 6: eine graphische Darstellung von Trajektorien in einer Matrix.

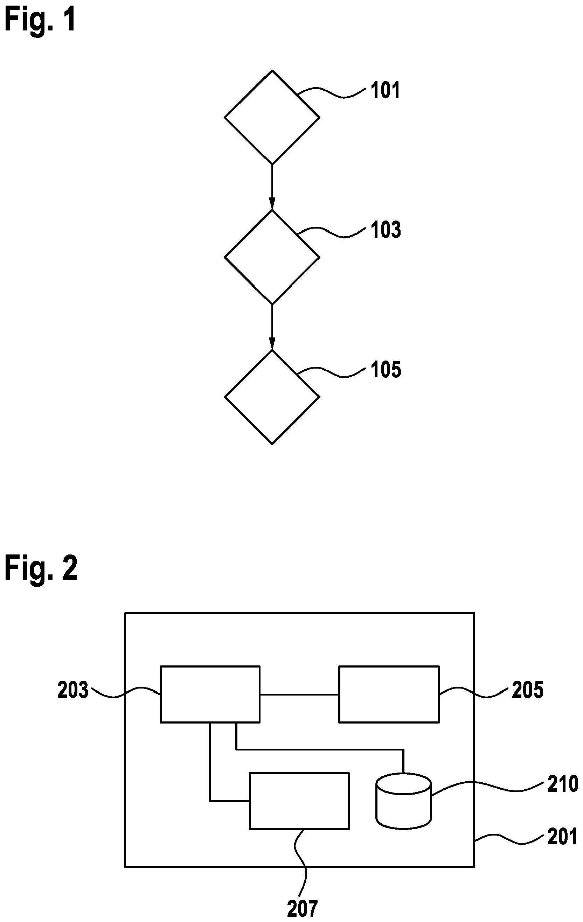

Fig. 1 zeigt ein Ablaufdiagramm eines Verfahrens zum Führen eines Kraftfahrzeugs auf einem Parkplatz.

Gemäß einem Schritt 101 wird eine Route oder Trajektorie auf dem Parkplatz von einer Startposition zu einer Zielposition kraftfahrzeugextern ermittelt. Dabei erfolgt das Ermitteln in Abhängigkeit einer Beschaffenheit des Kraftfahrzeugs. In einem Schritt 103 wird zumindest ein Teilstück der Route an das Kraftfahrzeug über ein Kommunikationsnetzwerk gesendet. Gemäß einem Schritt 105 wird das Kraftfahrzeug beim Abfahren des Teilstücks auf eine Abweichung beim autonomen Abfahren des Teilstücks mittels eines kraftfahrzeugexternen Überwachungssystems überwacht. Das Kraftfahrzeug wird somit kraftfahrzeugextern geführt, also ferngesteuert.

Fig. 2 zeigt eine Vorrichtung 201 zum Führen eines Kraftfahrzeugs auf einem Parkplatz. Die Vorrichtung 201 umfasst einen Prozessor 203, der ausgebildet ist, eine Route oder Trajektorie auf dem Parkplatz von einer Startposition zu einer Zielposition zu ermitteln. Des Weiteren umfasst die Vorrichtung 201 eine Kommunikationsschnittstelle 205, die ausgebildet ist, zumindest ein Teilstück der Route an das Kraftfahrzeug über ein Kommunikationsnetzwerk zu senden. Die Vorrichtung 201 umfasst ferner ein Überwachungssystem 207, das ausgebildet ist, das Kraftfahrzeug beim autonomen Abfahren des Teilstücks auf eine Abweichung beim Fahren des Teilstücks zu überwachen. Außerdem ist eine Einrichtung 210 zur Ermittlung einer Trajektorie vorgesehen. Die Einrichtung 210 kann insbesondere eine Speichereinrichtung umfassen.

Die Vorrichtung 201 ist nach einer Ausführungsform ausgebildet, ein Verfahren, insbesondere das Verfahren gemäß Fig. 1, aus- oder durchzuführen.

Die Vorrichtung ist eine kraftfahrzeugexterne Vorrichtung, also selbst nicht im Kraftfahrzeug vorhanden oder angeordnet. Es ist somit eine kraftfahrzeugexterne Fernsteuerung des Kraftfahrzeugs ermöglicht. Dem Kraftfahrzeug wird hierbei gesagt, wie es auf dem Parkplatz zu fahren hat. Das Kraftfahrzeug muss somit einfach nur das vorgegebene Teilstück abfahren, um auf dem Parkplatz autonom fahren zu können. Es muss für seine autonome Fahrt kein Wissen über den Parkplatz haben. Insbesondere muss das Kraftfahrzeug für seine autonome Fahrt auf dem Parkplatz keine Lokalisierung von sich selbst auf dem Parkplatz durchführen. Denn dies ist in der Regel nur schwer möglich, da üblicherweise für eine Lokalisierung eine Sichtverbindung zu Satelliten, beispielsweise GPS-Satelliten, vorhanden sein muss. Dies ist in der Regel auf Parkplätzen, insbesondere in Parkhäusern oder Parkgaragen, nicht der Fall.

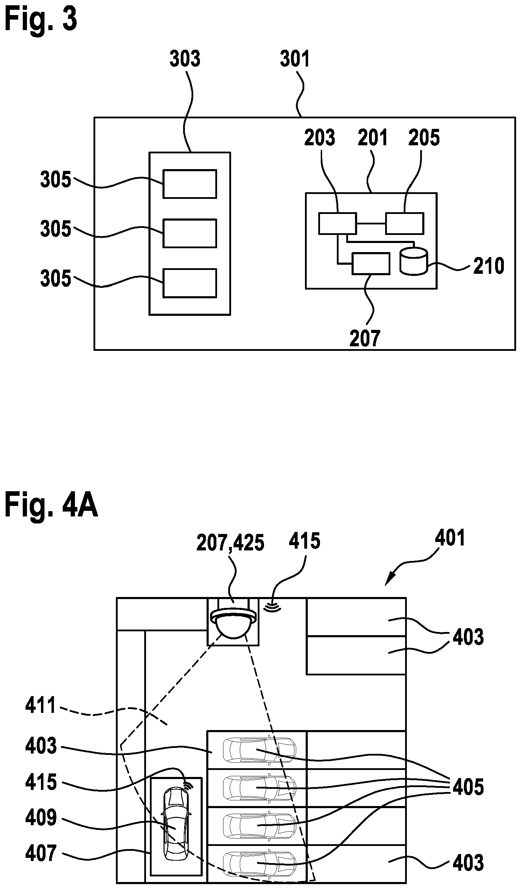

Fig. 3 zeigt ein Parksystem 301 für Kraftfahrzeuge. Das Parksystem 301 umfasst einen Parkplatz 303. Der Parkplatz 303 umfasst eine oder mehrere Parkpositionen 305. Das Parksystem 301 umfasst ferner die Vorrichtung 201 der Fig. 2.

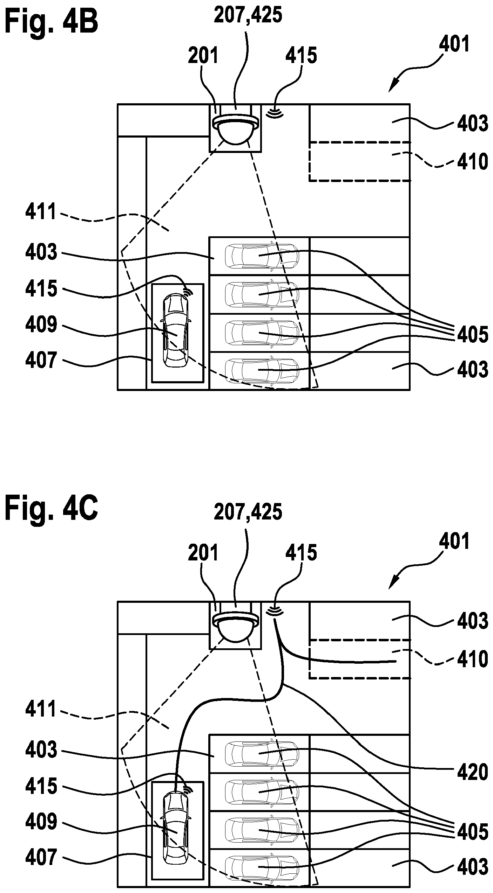

Fig. 4A bis G zeigen jeweils einen Zeitpunkt bei einer Durchführung eines automatischen Parkvorgangs, eines sogenannten Automatic Valet Parking.

Gezeigt ist in den Figuren 4A bis 4G jeweils ein Parkplatz 401, umfassend mehrere Parkpositionen 403, die Parkständen oder Abstellflächen entsprechen. An diesen Parkpositionen 403 können also Kraftfahrzeuge parken. Die geparkten Kraftfahrzeuge 405 sind beispielsweise AVP-Kraftfahrzeuge. An einer Abgabeposition 407 ist ein AVP-Kraftfahrzeug 409 abgestellt worden. Dieses soll nun zu seiner ihm zugewiesenen Parkposition 403 fahren.

Fig. 4A zeigt das AVP-Kraftfahrzeug 409, welches auf der Abgabeposition 407 abgestellt ist. Es ist eine Vorrichtung 201 vorgesehen, wobei hier zur verbesserten Übersicht nur dessen Überwachungssystem 207 gezeigt ist. Die weiteren Elemente der Vorrichtung 201 sind aus Übersichtlichkeitsgründen nicht gezeigt.

Das Überwachungssystem 207 umfasst nach einer Ausführungsform eine oder mehrere Überwachungskameras 425, von denen wenigstens eine als Videokamera ausgebildet sein kann. Das Überwachungssystem 207 umfasst nach einer weiteren Ausführungsform beispielsweise einen oder mehrere Radarsensoren, Lidarsensoren, Kameras, Videokameras, Lichtschranken oder eine Kombination mehrerer Sensoren. Andere Sensoren sind ebenfalls möglich. Die Vorrichtung 201 detektiert also mittels des Überwachungssystems 207 die Anwesenheit des AVP-Kraftfahrzeugs 409 an der Abgabeposition 407.

Die Vorrichtung 201 ermittelt also im Folgenden eine zugewiesene Parkposition für das Kraftfahrzeug 409, die in Fig. 4B gestrichelt dargestellt und mit dem Bezugszeichen 410 versehen ist. Ein beispielhafter Erfassungswinkel des Überwachungssystems 207 ist symbolisch mit einem Kegel mit dem Bezugszeichen 411 dargestellt. Die Kommunikation zwischen der Vorrichtung 201 und dem Kraftfahrzeug 409 wird insbesondere über ein drahtloses Kommunikationsnetzwerk, insbesondere WLAN, durchgeführt. Dies ist symbolisch mit einem entsprechenden Piktogramm dargestellt, auf welches das Bezugszeichen 415 zeigt.

Die Vorrichtung 201 ermittelt ferner eine Trajektorie oder einen Weg oder einen Pfad oder eine Route 420 von der Abgabeposition 407 zu der zugewiesenen Parkposition 410. Es ist bevorzugt, dass die ermittelte Route 420 in Teilstücke aufgeteilt wird, die einzeln, insbesondere sukzessive, an das Kraftfahrzeug gesendet werden.

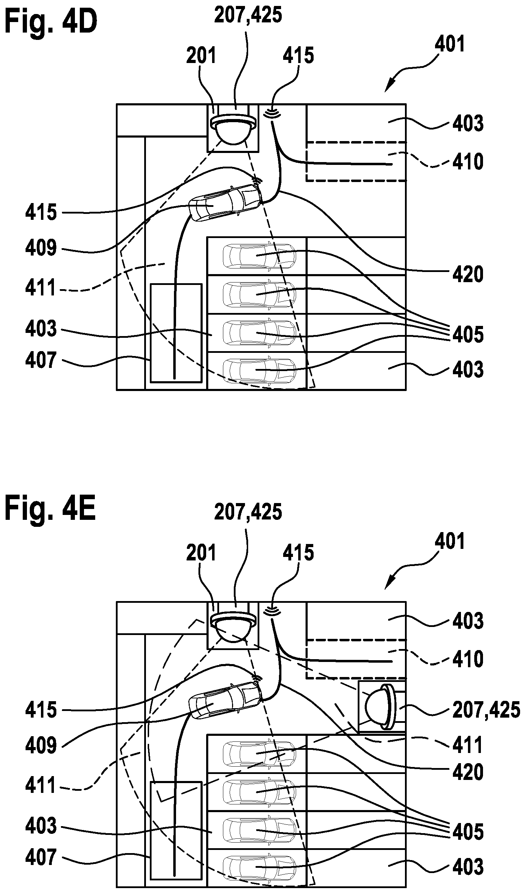

Fig. 4D zeigt, wie das Kraftfahrzeug 409 nun die ermittelte Route 420 stückweise abfährt. Hierbei wird es während des Abfahrens mittels des Überwachungssystems 207 überwacht. Fig. 4E zeigt beispielhaft eine weitere Überwachungskamera 425 auf dem Parkplatz 401, die einen entsprechenden Erfassungswinkel 411 aufweist, innerhalb welchem das Kraftfahrzeug 409 mittels der Überwachungskamera 425 erfasst werden kann. Die Überwachungskamera 425 kann insbesondere eine Videokamera umfassen.

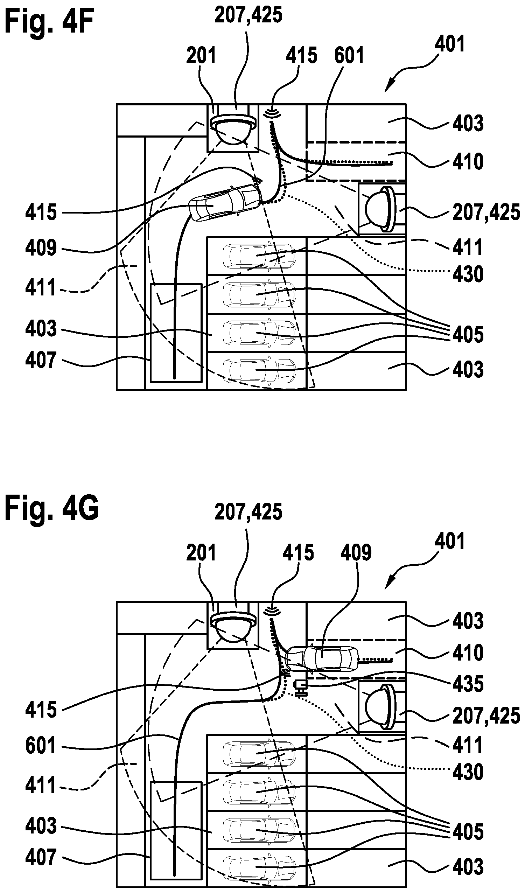

Sofern mittels eines der Überwachungssysteme 207 eine Abweichung beim Abfahren der Route 420 festgestellt wurde, kann die Vorrichtung 201 einen Ausgleichspfad oder eine Ausgleichsroute berechnen oder ermitteln. Dies ist in Fig. 4F gezeigt, wobei die Ausgleichsroute mit dem Bezugszeichen 430 versehen ist.

Ein Einparkvorgang, wie in Fig. 4G gezeigt, kann in einer Ausführungsform durch ein Parkassistenzsystem, also durch das Kraftfahrzeug 409 selbst, durchgeführt werden. Hierfür umfasst das Kraftfahrzeug 409 zum Beispiel eine symbolisch dargestellte Umfeldsensorik 435, umfassend beispielsweise einen oder mehrere Radarsensoren und/oder einen oder mehrere Ultraschallsensoren und/oder einen oder mehrere Lidar- oder Videosensoren. In einer anderen Ausführungsform kann alternativ die Vorrichtung 201 die Berechnung oder das Ermitteln der entsprechenden Einparkroute übernehmen. Gleiches gilt auch für das Ausparken.

Der Weg des Kraftfahrzeugs 409 zurück von der zugewiesenen Parkposition 410 zu der Abgabeposition 407 kann in analoger Weise durchgeführt werden, so dass auch dieser Transport automatisiert erfolgen kann. Auch hier wird dann bevorzugterweise eine entsprechende Rückfahrroute ermittelt und das Kraftfahrzeug 409 beim stückweise Abfahren der Rückfahrroute überwacht und gegebenenfalls werden entsprechende Ausgleichspfade 430 oder Ausgleichsrouten 430 bei Bedarf bestimmt und an das Kraftfahrzeug 409 übertragen.

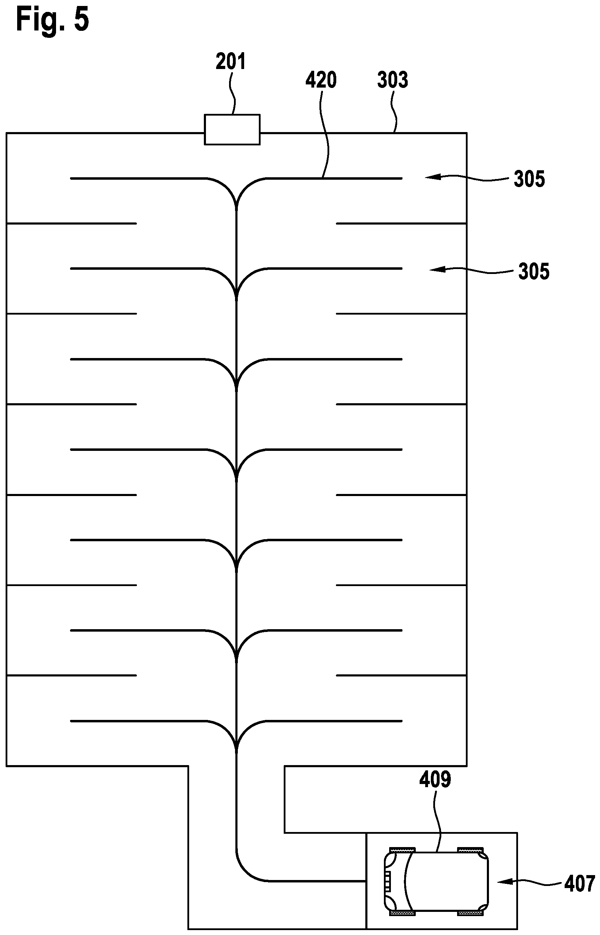

Fig. 5 zeigt ein Parksystem 301 für Kraftfahrzeuge. Das Parksystem 301 umfasst einen Parkplatz 303. Der Parkplatz 303 umfasst eine oder mehrere Parkpositionen 305. Das Parksystem 301 umfasst ferner die Vorrichtung 201 der Fig. 2.

Um ein Kraftfahrzeug 409 von der Abgabeposition 407 zu einer der Parkpositionen 305 zu führen, ist eine Anzahl Trajektorien 420 vorgesehen. Die Abgabeposition 407 ist dabei eine Startposition und die Parkposition 305 eine Zielposition der Trajektorie 420. In der vorliegenden Ausführungsform fällt der Zielpunkt mit der Parkposition 305 zusammen; in einer anderen Ausführungsform kann der Zielpunkt auch im Bereich der Parkposition 305 liegen, so dass ein Einparkvorgang auf die Parkposition 305 ohne Unterstützung durch die Vorrichtung 201 mittels eines Einparkassistenten an Bord des Kraftfahrzeugs 409 durchgeführt werden kann.

Es ist bevorzugt, dass jeder Parkposition 305 wenigstens eine Trajektorie 420 zugewiesen ist. Werden mehrere Abgabepositionen 407 bzw. Startpositionen unterstützt, so ist bevorzugterweise jeder Kombination aus einer Abgabeposition 407 bzw. einer Startposition und einer Parkposition 305 bzw. Zielposition wenigstens eine Trajektorie 420 zugeordnet.

Unterschiedliche Beschaffenheiten des Kraftfahrzeugs 409 ermöglichen bzw. erfordern unterschiedliche Führungen einer Trajektorie 420 zwischen der Abgabeposition 407 und der Parkposition 305. Beispielsweise kann ein schmales Kraftfahrzeug eine Engstelle auf dem Parkplatz 303 besser passieren als ein breites Kraftfahrzeug. Ein Kraftfahrzeug mit einem kurzen Radstand kann möglicherweise eine engere Kurve fahren als ein Kraftfahrzeug mit einem langen Radstand. Es ist daher bevorzugt, dass für das Kraftfahrzeug 409 eine Trajektorie 420 ermittelt wird, die der Beschaffenheit des Kraftfahrzeugs 409 zugeordnet ist. Die Beschaffenheit kann beispielsweise statische Maße wie eine Länge, eine Breite oder eine Höhe umfassen. Die Beschaffenheit kann auch dynamische Aspekte wie einen minimalen Kurvenradius oder eine Lenkgeschwindigkeit umfassen. In einer Ausführungsform sind Parameter des Kraftfahrzeugs 409 in einer Tabelle hinterlegt, deren Schlüssel ein Fahrzeugtyp ist. Beispielsweise kann festgestellt werden, dass ein Kraftfahrzeug 409 des Herstellers A eine vorbestimmte Länge D aufweist. In einer weiteren Ausführungsform kann auch ein Schlüssel oder Subschlüssel für eine Ausführung des Kraftfahrzeugs 409 vorgesehen sein. So kann beispielsweise eine Sonderausstattung berücksichtigt werden.

Bevor das Kraftfahrzeug 409 von der Abgabeposition 407 zu einer Parkposition 305 geführt wird, kann festgestellt werden, ob es eine Trajektorie 420 gibt, die für das vorliegende Kraftfahrzeug 409 geeignet ist. Ist dies nicht der Fall, so kann für das Kraftfahrzeug 409 eine andere Parkposition 305 ausgewählt und eine entsprechende Trajektorie 420 dazu ermittelt werden. Anschließend kann die oben beschriebene Führung des Kraftfahrzeugs 409 entlang der Trajektorie 420 erfolgen.

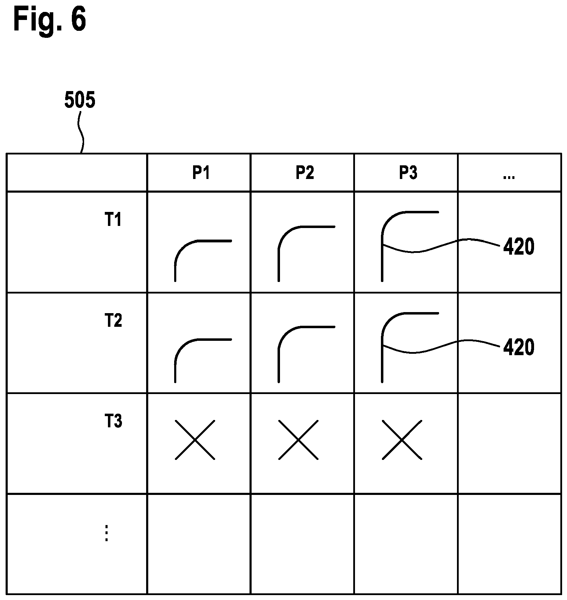

Fig. 6 zeigt eine graphische Darstellung mehrerer Trajektorien 420 nach Art einer Tabelle. Die dargestellten Trajektorien 420 liegen dem Parksystem 301 bevorzugterweise bereits vor, noch bevor ein Kraftfahrzeug 409 zu einer Parkposition geführt werden soll. Es ist bevorzugt, dass eine Vielzahl Trajektorien 420 bestimmt und abgespeichert werden, bevor eine davon für das Kraftfahrzeug 409 ermittelt wird. Die Trajektorien 420 können insbesondere innerhalb der Einrichtung 210 zur Ermittlung einer Trajektorie 420 in einem Speicher abgelegt sein. Die Auswahl einer Trajektorie 420 kann von einem oder mehreren Kriterien abhängig sein, so dass eine Liste, eine zweidimensionale oder mehrdimensionale Tabelle oder Matrix als Speicherstruktur verwendet werden kann. In der vorliegenden, beispielhaften Ausführungsform ist eine zweidimensionale Matrix 505 vorgesehen, die Dimensionen eines Typs (T1, T2, T3 ...) des Kraftfahrzeugs 409 und eines Pfads (P1, P2, P3, ...) zwischen der Abgabeposition 407 und unterschiedlichen Parkpositionen 403 umfasst. Weitere Dimensionen können nach Bedarf hinzugefügt werden, beispielsweise bezüglich eines Modells oder einer Ausstattung des Kraftfahrzeugs 409.

Einer Kombination von Werten in den unterstützten Dimensionen der Matrix 505 ist eine Trajektorie 420 zugeordnet. Unterschiedlichen Fahrzeugtypen können beispielsweise für den Weg zwischen der Abgabeposition 407 und derselben Parkposition 305 unterschiedliche Trajektorien 420 zugeordnet sein. Die unterschiedlichen Trajektorien 420 können sich insbesondere aus geometrischen Gegebenheiten oder Beschaffenheiten des Kraftfahrzeugs 409 ergeben. In entsprechender Weise können einem Kraftfahrzeugtyp unterschiedliche Trajektorien 420 zwischen der Abgabeposition 407 und unterschiedlichen Parkpositionen 305 zugeordnet sein. Selbstverständlich ist es möglich, dass die gleiche Trajektorie 420 an mehreren Stellen der Matrix 505 verwendet wird, beispielsweise für unterschiedliche Kraftfahrzeugtypen auf gleichen Wegen.

In einer weiteren Ausführungsform sind für jedes Kraftfahrzeug 409 (Modell / Ausstattungsvariante) verschiedene Trajektorien 420 bereitgestellt. Beispielsweise kann eine Trajektorie 420 für einen Parkplatz 303, 401 gelten, auf dem (zeitweise) keine Menschen und / oder andere manuell gesteuerten Kraftfahrzeuge 405 unterwegs sind. In diesem Fall könnte das Kraftfahrzeug 409 zur Vereinfachung der Steuerung auch eine Gegenfahrbahn benutzen. Weitere Möglichkeiten wären, dass es auf dem Parkplatz 303, 401 zu einer Parkposition 403 verschiedene Routen gibt. Weitere Trajektorien 420 können unter der Annahme unterschiedlicher Geschwindigkeiten des Kraftfahrzeug 409 bestimmt sein.

Es kann auch den Fall geben, dass einer Kombination von Werten der unterstützten Dimensionen keine Trajektorie 420 in der Matrix 505 zugeordnet ist. Beispielsweise kann ein Kraftfahrzeug 409 des Typs T3 auf keine der Parkpositionen 305 verbracht werden, die den Spalten P1, P2 oder P3 zugeordnet sind. Dieser Fall kann beispielsweise vorliegen, wenn das Kraftfahrzeug 409 des Typs T3 zu groß für die Parkpositionen 305 ist.

Durch die bevorzugterweise tabellarische oder matrixförmige Bereitstellung möglichst aller Trajektorien 420, die zur automatisierten Führung eines Kraftfahrzeugs 409 erforderlich sein können, kann das Bestimmen einer passenden Trajektorie 420 für ein gegebenes Kraftfahrzeug 409 und eine gegebene Parkposition 305 leicht und schnell erfolgen. Im üblichen Betrieb des Parkplatzes 401 kann kein weiteres Bestimmen von Trajektorien 420 erforderlich sein.

## Patentansprüche

1. Verfahren zum Führen eines Kraftfahrzeugs (409) auf einem Parkplatz (303), wobei
- eine Trajektorie (420) auf dem Parkplatz (303) von einer Startposition (407) zu einer Zielposition (305) kraftfahrzeugextern ermittelt wird, wobei
- zumindest ein Teilstück der Trajektorie (420) an das Kraftfahrzeug (409) über ein Kommunikationsnetzwerk (415) gesendet wird, wobei
- die Trajektorie (420) in Abhängigkeit einer Beschaffenheit des Kraftfahrzeugs (409) ermittelt wird, wobei
- das Kraftfahrzeug (409) beim Abfahren des Teilstücks auf eine Abweichung beim autonomen Abfahren des Teilstücks mittels eines kraftfahrzeugexternen Überwachungssystems (207) überwacht wird, und wobei
- die ermittelte Trajektorie (420) in Teilstücke aufgeteilt wird, die einzeln an das Kraftfahrzeug gesendet werden, so dass das Kraftfahrzeug die Trajektorie (420) stückweise abfahren kann,
**dadurch gekennzeichnet, dass**
- die jeweilige Länge eines Teilstücks abhängig von einem Schwierigkeitsgrad betreffend das Abfahren des Teilstücks ist.

2. Verfahren nach Anspruch 1, wobei die Beschaffenheit einen Fahrzeugtyp (T1, T2, ...) umfasst.

3. Verfahren nach Anspruch 1 oder 2, wobei die Beschaffenheit eine Ausstattung umfasst.

4. Verfahren nach einem der vorangehenden Ansprüche, wobei die Trajektorie (420) einer Strecke zwischen der Startposition (407) und der Zielposition (305) zugeordnet ist.

5. Verfahren nach einem der vorangehenden Ansprüche, wobei die Trajektorie (420) durch Versuch ermittelt ist.

6. Verfahren nach einem der vorangehenden Ansprüche, wobei die Trajektorie (420) auf der Basis von geometrischen oder funktionalen Daten des Parkplatzes (303) und des Kraftfahrzeugs (409) bestimmt wird.

7. Verfahren nach einem der vorangehenden Ansprüche, wobei die Trajektorie (420) vor einer Parkposition (305) endet und ein Einparkvorgang des Kraftfahrzeugs (409) auf die Parkposition (305) autonom durch das Kraftfahrzeug (409) gesteuert wird.

8. Verfahren nach einem der vorangehenden Ansprüche, wobei die Trajektorie (420) eine Parkposition (305) umfasst.

9. Verfahren nach einem der vorangehenden Ansprüche, wobei bestimmt wird, für welche Zielpositionen (305) auf dem Parkplatz (303) eine Trajektorie (420) für das Kraftfahrzeug (409) ermittelt werden kann.

10. Verfahren nach einem der vorangehenden Ansprüche, wobei die Länge eines Teilstücks vom dem aktuellen Fahrtroutenteilstück und/oder der Fahrtroutenkomplexität abhängt, wobei insbesondere ein gerades Teilstück länger als ein kurviges Teilstück ist.

11. Vorrichtung (201) zum Führen eines Kraftfahrzeugs (409) auf einem Parkplatz (303), umfassend:
- einen Prozessor (203), der ausgebildet ist, eine Trajektorie (420) auf dem Parkplatz (303) von einer Startposition (407) zu einer Zielposition (305) zu ermitteln,
- eine Kommunikationsschnittstelle (205), die ausgebildet ist, zumindest ein Teilstück der Trajektorie (420) an das Kraftfahrzeug (409) über ein Kommunikationsnetzwerk (415) zu senden,
- ein Überwachungssystem (207), das ausgebildet ist, das Kraftfahrzeug (409) beim autonomen Abfahren des Teilstücks auf eine Abweichung beim Abfahren des Teilstücks zu überwachen, und
- eine Ermittlungseinrichtung (210), die ausgebildet ist, die Trajektorie (420) in Abhängigkeit einer Beschaffenheit des Kraftfahrzeugs (409) zu ermitteln,
- wobei die Vorrichtung eine kraftfahrzeugexterne Vorrichtung ist, und wobei die Vorrichtung ausgebildet ist, die ermittelte Trajektorie (420) in Teilstücke aufzuteilen und die Teilstücke einzeln über das Kommunikationsnetzwerk an das Kraftfahrzeug zu senden, so dass das Kraftfahrzeug die Trajektorie stückweise abfahren kann,
**dadurch gekennzeichnet, dass**
die jeweilige Länge eines Teilstücks abhängig von einem Schwierigkeitsgrad betreffend das Abfahren des Teilstücks ist.

12. Parksystem (301) für Kraftfahrzeuge (409), umfassend einen Parkplatz (303), der eine oder mehrere Parkpositionen (305) aufweist, und die Vorrichtung (201) nach Anspruch 11.

## Claims

1. Method for guiding a motor vehicle (409) in a parking lot (303), wherein
- a trajectory (420) in the parking lot (303) from a starting position (407) to a target position (305) is ascertained externally to the motor vehicle, wherein
- at least a portion of the trajectory (420) is transmitted to the motor vehicle (409) via a communication network (415), wherein
- the trajectory (420) is ascertained on the basis of a property of the motor vehicle (409), wherein
- the motor vehicle (409), when travelling the portion, is monitored for a deviation when autonomously travelling the portion by way of a monitoring system (207) external to the motor vehicle, and wherein
- the ascertained trajectory (420) is divided into portions that are transmitted to the motor vehicle individually, such that the motor vehicle is able to travel the trajectory (420) in portions,
**characterized in that**
- the respective length of a portion is dependent on a degree of difficulty concerning the travelling of the portion.

2. Method according to Claim 1, wherein the property comprises a vehicle type (T1, T2, etc.).

3. Method according to Claim 1 or 2, wherein the property comprises a configuration.

4. Method according to one of the preceding claims, wherein the trajectory (420) is assigned to a distance between the starting position (407) and the target position (305).

5. Method according to one of the preceding claims, wherein the trajectory (420) is ascertained experimentally.

6. Method according to one of the preceding claims, wherein the trajectory (420) is determined on the basis of geometric or functional data of the parking lot (303) and of the motor vehicle (409).

7. Method according to one of the preceding claims, wherein the trajectory (420) ends before a parking space (305) and a parking manoeuvre of the motor vehicle (409) in the parking space (305) is controlled autonomously by the motor vehicle (409).

8. Method according to one of the preceding claims, wherein the trajectory (420) comprises a parking space (305).

9. Method according to one of the preceding claims, wherein the target positions (305) in the parking lot (303) for which a trajectory (420) for the motor vehicle (409) is able to be ascertained are determined.

10. Method according to one of the preceding claims, wherein the length of a portion is dependent on the current driving route portion and/or the driving route complexity, wherein a straight portion is in particular longer than a curved portion.

11. Device (201) for guiding a motor vehicle (409) in a parking lot (303), comprising:
- a processor (203) that is designed to ascertain a trajectory (420) in the parking lot (303) from a starting position (407) to a target position (305),
- a communication interface (205) that is designed to transmit at least a portion of the trajectory (420) to the motor vehicle (409) via a communication network (415),
- a monitoring system (207) that is designed to monitor the motor vehicle (409), when autonomously travelling the portion, for a deviation when travelling the portion, and
- an ascertainment apparatus (210) that is designed to ascertain the trajectory (420) on the basis of a property of the motor vehicle (409),
- wherein the device is a device external to the motor vehicle, and wherein
the device is designed to divide the ascertained trajectory (420) into portions and to transmit the portions to the motor vehicle individually via the communication network, such that the motor vehicle is able to travel the trajectory in portions, **characterized in that** the respective length of a portion is dependent on a degree of difficulty concerning the travelling of the portion.

12. Parking system (301) for motor vehicles (409), comprising a parking lot (303) that has one or more parking spaces (305), and the device (201) according to Claim 11.

## Revendications

1. Procédé permettant de conduire un véhicule automobile (409) sur une aire de stationnement (303), dans lequel
- une trajectoire (420) sur l'aire de stationnement (303) d'une position de départ (407) à une position de destination (305) est établie à l'extérieur du véhicule automobile, dans lequel
- au moins un tronçon de la trajectoire (420) est envoyé au véhicule automobile (409) par un réseau de communication (415), dans lequel
- la trajectoire (420) est établie en fonction de la nature du véhicule automobile (409), dans lequel
- lorsqu'il parcourt le tronçon, le véhicule automobile (409) est surveillé quant à un écart lors du parcours autonome du tronçon, au moyen d'un système de surveillance (207) externe au véhicule automobile, et dans lequel
- la trajectoire établie (420) est divisée en tronçons qui sont envoyés individuellement au véhicule automobile de sorte que le véhicule automobile peut parcourir la trajectoire (420) tronçon par tronçon, **caractérisé en ce que**
- la longueur respective du tronçon dépend d'un degré de difficulté concernant le parcours du tronçon.

2. Procédé selon la revendication 1, dans lequel la nature comprend un type de véhicule (T1, T2, ...).

3. Procédé selon la revendication 1 ou 2, dans lequel la nature comprend un équipement.

4. Procédé selon l'une quelconque des revendications précédentes, dans lequel la trajectoire (420) est associée à un trajet entre la position de départ (407) et la position de destination (305).

5. Procédé selon l'une quelconque des revendications précédentes, dans lequel la trajectoire (420) est établie par essais.

6. Procédé selon l'une quelconque des revendications précédentes, dans lequel la trajectoire (420) est déterminée sur la base de données géométriques ou fonctionnelles de l'aire de stationnement (303) et du véhicule automobile (409).

7. Procédé selon l'une quelconque des revendications précédentes, dans lequel la trajectoire (420) se termine devant une position de stationnement (305), et un processus de stationnement du véhicule automobile (409) à la position de stationnement (305) est commandé de manière autonome par le véhicule automobile (409).

8. Procédé selon l'une quelconque des revendications précédentes, dans lequel la trajectoire (420) comprend une position de stationnement (305).

9. Procédé selon l'une quelconque des revendications précédentes, dans lequel il est déterminé pour quelles positions de destination (305) sur l'aire de stationnement (303) une trajectoire (420) peut être établie pour le véhicule automobile (409).

10. Procédé selon l'une quelconque des revendications précédentes, dans lequel la longueur d'un tronçon dépend du tronçon d'itinéraire actuel et/ou de la complexité de l'itinéraire, dans lequel en particulier un tronçon droit est plus long qu'un tronçon sinueux.

11. Dispositif (201) permettant de conduire un véhicule automobile (409) sur une aire de stationnement (303), comprenant :
- un processeur (203) qui est réalisé pour établir une trajectoire (420) sur l'aire de stationnement (303) d'une position de départ (407) à une position de destination (305),
- une interface de communication (205) qui est réalisée pour envoyer au moins un tronçon de la trajectoire (420) au véhicule automobile (409) par un réseau de communication (415),
- un système de surveillance (207) qui est réalisé pour surveiller le véhicule automobile (409) lors du parcours autonome du tronçon quant à un écart lors du parcours du tronçon, et
- un dispositif d'établissement (210) qui est réalisé pour établir la trajectoire (420) en fonction de la nature du véhicule automobile (409),
- dans lequel le dispositif est un dispositif externe au véhicule automobile, et dans lequel le dispositif est réalisé pour diviser la trajectoire établie (420) en tronçons et pour envoyer les tronçons individuellement par le réseau de communication au véhicule automobile de sorte que le véhicule automobile peut parcourir la trajectoire tronçon par tronçon, **caractérisé en ce que**
- la longueur respective du tronçon dépend d'un degré de difficulté concernant le parcours du tronçon.

12. Système de stationnement (301) pour des véhicules automobiles (409), comprenant une aire de stationnement (303) qui présente une ou plusieurs positions de stationnement (305) et le dispositif (201) selon la revendication 11.
